# EUROPEAN PATENT SPECIFICATION

(11) **EP 1 815 652 B1**
(45) Date of publication and mention of the grant of the patent: **05.04.2017**
(21) Application number: 05813041.0
(22) Date of filing: 21.11.2005
(51) Int. Cl.: H04L 9/00, H04L 12/58

(54) **E-MAIL MESSAGING TO/FROM A MOBILE TERMINAL**
EMAIL-NACHRICHTENÜBERMITTLUNG ZU/VON EINEM MOBILEN ENDGERÄT
MESSAGERIE DE COURRIER ELECTRONIQUE VERS/DEPUIS UN TERMINAL MOBILE

(30) Priority: 22.11.2004 FI 20045451
(43) Date of publication of application: 08.08.2007
(73) Proprietor: Seven Networks, LLC, Marshall TX 75672 (US)
(72) Inventor: BACKHOLM, Ari, FI-02140 Espoo (FI); SALORINNE, Seppo, FI-00950 Helsinki (FI); SAARILAHTI, Antti, FI-00910 Helsinki (FI); KETONEN, Marko, FI-00530 Helsinki (FI); VUORNOS, Lauri, San Francisco, CA 94109 (US); SALMI, Petri, FI-02110 Espoo (FI)
(74) Representative: Leach, James
(86) International application number: PCT/FI2005/050424
(87) International publication number: WO 2006/053952

(56) References cited:
- EP-A1- 1 422 899
- EP-A1- 1 462 975
- WO-A1-03/098890
- US-A1- 2001 029 524
- US-A1- 2004 024 824
- US-A1- 2004 054 719
- US-A1- 2004 205 248
- US-B1- 6 219 694
- US-B1- 6 701 378

## Description

### BACKGROUND OF THE INVENTION

The invention relates to methods and equipment for transmitting electronic mail (e-mail) messages to or from a mobile terminal.

US patent 6 701 378 to Barry Gilhuly et al. discloses a system and method for pushing information, such as e-mail messages, from a host system to a mobile data communication device (mobile terminal). The technique permits e-mail processing at a mobile terminal in addition to a more stationary computer, referred to as a host system in the Gilhuly patent. Specifically, a redirector program operating at the host system enables a user to continuously redirect certain user-selected data items from the host system to the user's mobile data communication device upon detecting that one or more user-defined triggering events has occurred. The redirector program operates in connection with event-generating applications and repackaging systems at the host system to configure and detect a particular user-defined event, and then to repackage the user-selected data items in an electronic wrapper prior to pushing the data items to the mobile device. The mobile data communication device may originate new messages or reply messages to previously received information, such messages being transmitted to a wireless redirector host system, which then transmits a copy of the messages to both the intended recipient and a first electronic mail account associated with the mobile data communication device.

The above-described prior art technique suffers from certain limitations. For example, the host system, such as an office computer, and the mobile terminal require separate e-mail accounts. Some e-mail systems support a .*forward*-type file for forwarding e-mail messages from a first e-mail account to a second e-mail account, but some systems do not support it. It is difficult to set up e-mail systems that do not support such forwarding techniques.

Furthermore, the Gilhuly patent does not address issues that relate to manipulating e-mail messages at the second e-mail account (at the mobile terminal). For instance, it is difficult or impossible to use the terminal to arrange incoming e-mail messages into different folders at the host system. Also, if the terminal user deletes an incoming e-mail message at the terminal, a copy of the deleted message is not present in a "deleted items" folder at the host system, which typically is the case in e-mail systems. Likewise, when the terminal sends an e-mail message, a copy of the message is not added to the host system's "sent items" folder. A further related problem is that e-mail messages that the user has read at the terminal may appear as unread messages at the host system.

Yet another problem is that configuring an e-mail client software at the mobile terminal is difficult because of user interface restrictions in typical mobile terminals.

US2004/024824 provides a system and method of pushing user-selected data items from a host system to a user's mobile data communication device upon detecting the occurrence of one or more user-defined event triggers. The user may then move (or file) the data items to a particular folder within a folder hierarchy stored in the mobile data communication device, or may execute some other system operation on the data item. Software operating at the mobile device and the hot system then synchronizes the folder hierarchy of the mobile device with a folder hierarchy of the host system, and any actions executed on the data items at the mobile device are then automatically replicated on the same data items stored at the host system, thus eliminating the need for the user to manually replicate actions at the host system that have been executed at the mobile data communication device.

US2004/054719 includes systems and methods for providing uniform settings for multiple resources in a client-server environment. In an example embodiment, configuration information for an IM client is stored at a remotely-located database coupled to an IM server. Thus, regardless of the resource used to access an IM account, the IM client at that resource will be configured according to the information stored at the remotely-located database. Also, configuration information for an email client may also be stored at the remotely-located database, thereby permitting uniform configuration of email clients using the information stored at the remotely-located database.

US2001/029524 discloses a universal mail application which maintains login with a plurality of email applications for a particular subscriber, and presents file information (e.g., Inbox, Outbox, etc.) for a selected email account as desired by the subscriber, without requiring repeated logouts and logins, thus reducing network load and subscriber wait time. The various email applications may be defined and identified by appropriate parameters stored in corresponding email account information files maintained separately for each subscriber, which contain all necessary information to identify a particular email account, e.g., a POP account number, a server address, an IP address, etc. Multiple sets of email application files corresponding to the multiple email account files contain downloaded and uploaded message files from the respective email application programs. The multiple email account compilation module may be restricted or throttled back to send/receive email from the relevant email application programs only during desirable times (e.g., during non-peak hours), either on a system wide basis or on a per-subscriber (e.g., class of service) basis. The email application files maintain the relevant files (e.g., Inbox, Outbox, Sent items, Deleted items, Drafts as in a Microsoft OUTLOOK EXPRESS(TM) format) for perusal by the relevant subscriber, who is prompted on their mobile display for selection of any one of the email accounts at any one time.

EP1422899 relates to a method and a system for providing easy access to an e-mail account, in particular a POP3/SMTP e-mail account, via a mobile communication network. According to the invention the method comprises the steps of: providing a mobile terminal having a generic e-mail configuration with at least one default POP3/SMTP server address, setting up a connection to a server identified by the default POP3/SMTP server address via the mobile communication network using a standard POP3/SMTP protocol; in the proxy server: evaluating a user identification based on specific information assigned to the user, identifying an user e-mail account assigned to the user identification, setting up a connecting to the identified e-mail account of an e-mail system.

### BRIEF DESCRIPTION OF THE INVENTION

An object of the present invention is to provide a method and an apparatus for implementing the method so as to integrate e-mail processing at the mobile terminal more seamlessly with the e-mail processing at the host system. In other words, the object of the invention is to alleviate one or more of the disadvantages of the prior art.

The present invention provides a method as set out in Claim 1 and a system as set out in Claim 11. The dependent claims disclose specific embodiments of the invention.

An advantage of the invention is more seamless integration of e-mail processing between the host system and the mobile terminal. For example
- provisioning of mobile e-mail is possible without affecting e-mail configuration of the host system;
- messages sent or deleted at the mobile terminal are automatically moved to the respective folder at the host system, ie, the "sent items" or "deleted items" folder.

### BRIEF DESCRIPTION OF THE DRAWINGS

In the following the invention will be described in greater detail by means of preferred embodiments with reference to the attached drawings, in which
Figure 1 shows an exemplary system architecture in which the invention can be used;
Figure 2 shows provisioning of an e-mail system;
Figure 3 shows a hypothetical scenario in which the e-mail system is used;
Figure 4 shows information flows in mobile-terminated e-mail transmission;
Figure 5 shows information flows in mobile-originated e-mail transmission;
Figure 6 shows an enhanced embodiment in which some of the functions of the messaging centre are performed by a separate connectivity function;
Figure 7 shows traffic flow in the embodiment shown in Figure 6.

### DETAILED DESCRIPTION OF PREFERRED EMBODIMENTS

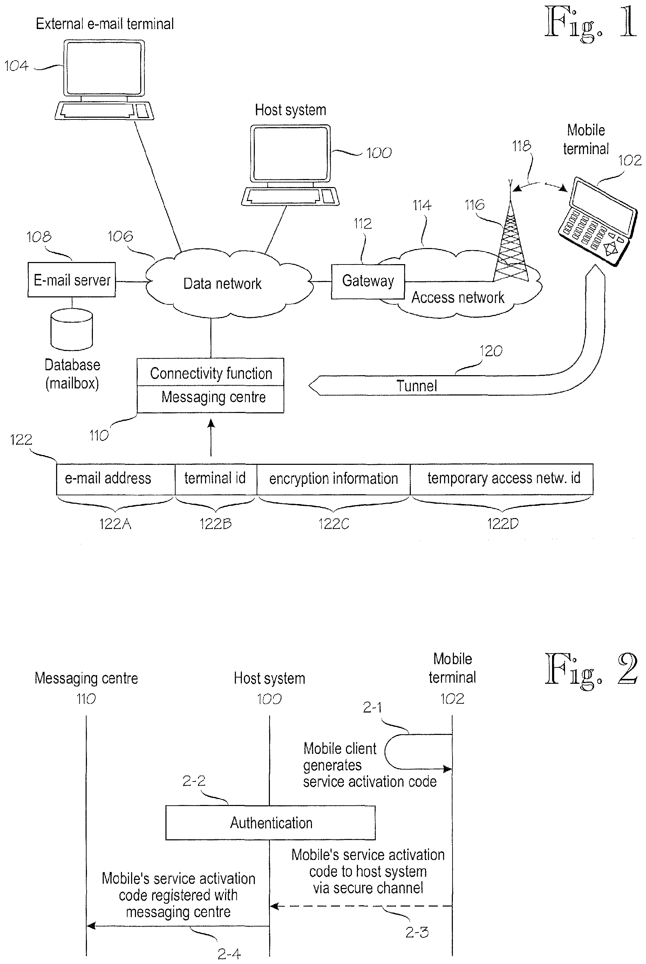

Figure 1 shows an exemplary system architecture in which the invention can be used. Reference numeral 100 denotes a host system that is able to send an receive e-mail messages. Reference numeral 102 denotes a mobile terminal, also able to send an receive e-mail messages. The e-mail messages may originate or terminate at external e-mail terminals, one of which is denoted by reference numeral 104.The invention aims at improving cooperation between the host system 100 and mobile terminal 102 such that they can use a single e-mail account as transparently as possible. This means, for example, that the users of the external e-mail terminals 104, when sending or receiving e-mail, do not need to know if the user of the host system 100 actually uses the host system 100 or the mobile terminal 102 to communicate via e-mail. The transparency also means that e-mail manipulation at the mobile terminal 102 has, as far as possible, the same effect as the corresponding e-mail manipulation at the host system 100. For example, e-mail messages read at the mobile terminal 102 should preferably be marked as read at the host system.

Reference numeral 106 denotes a data network, such as an IP (Internet Protocol) network, which may be the common Internet or its closed subnet-works, commonly called intranets or extranets. Reference numeral 108 denotes an e-mail server and its associated database. The database stores an e-mail account, addressable by means of an e-mail address, that appears as a mailbox to the owner of the e-mail account. In order to communicate with mobile terminals 102, the data network 106 is connected, via a gateway 112 to an access network 114. The access network comprises a set of base stations 116 to provide wireless coverage over a wireless interface 118 to the mobile terminals 102.

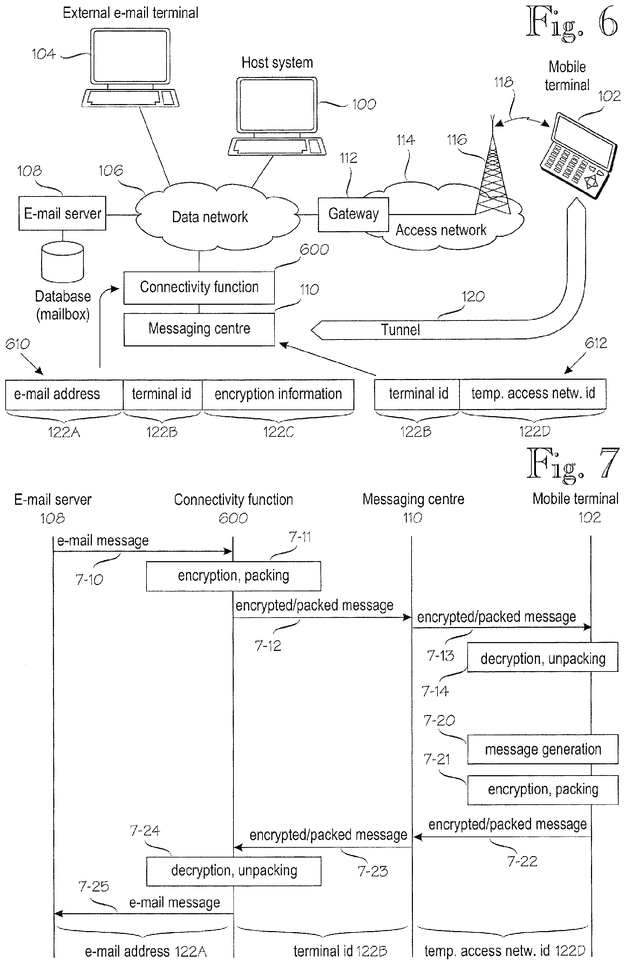

Reference numeral 110 denotes a messaging centre that is largely responsible for providing the above-mentioned transparency between the host system 100 and the mobile terminal 102. The system architecture also comprises a connectivity function, whose task is to push e-mail messages to the mobile terminal. In the embodiment shown in Figure 1, the connectivity function is considered a physically integral but logically distinct element of the messaging centre 110. Later, in connection with Figures 6 and 7, an enhanced embodiment will be described that explicitly assigns the security-related functions to the connectivity function and traffic-related functions to the messaging centre 110.

The mobile terminal 102 may be a pocket or laptop computer with a radio interface, a smart cellular telephone, or the like. Depending on implementation, the host system 100, if present, may have different roles. In some implementations the host system 100 is optional and may be a conventional office computer that merely acts as the mobile terminal user's principal computer and e-mail terminal. In other implementations the host system may act as a platform for a single user's connectivity function, in addition to being an office computer. In yet other implementations the host system 100 may comprise the connectivity function for several users. Thus it is a server instead of a normal office computer.

We assume here that the access network 114 is able to establish and maintain a tunnel 120 between the messaging centre 110 and the mobile terminal 102. For instance, the tunnel may be set up using GPRS Tunnelling Protocol (GTP) or its later derivatives, or any other suitable tunnelling protocol.

In a real system, there are naturally a large number of mobile terminals 102 and tunnels 120. In order to keep track of which e-mail account and which tunnel belongs to which mobile terminal, the messaging centre 110 maintains an association 122 for each mobile terminal supported by it. Each association 122 joins three fields, namely an e-mail address 122A assigned to the mobile terminal or its user, encryption information 122C and a temporary wireless identity 122D of the mobile terminal in the access network. The embodiment shown in Figure 1 also employs a terminal identifier 122B which may be the same as the e-mail address 122A of the mobile terminal 102, in which case the association 122 actually associates three information items. Alternatively, the terminal identifier 122B may be an identifier arbitrarily assigned to the mobile terminal. In a preferred implementation the terminal identifier 122B is the mobile terminal's equipment identifier or its derivative. The encryption information 122C will be generated by the mobile terminal, as described later in connection with Figure 2. The temporary wireless identity 122D may be the identifier of the tunnel to the mobile station. Of course, the tunnel identifier is not permanent and is only known when a tunnel exists. The creation and use of the association 122 will be further described in connection with Figures 2, 3 and 6.

Figure 2 shows provisioning of an e-mail system in a system as shown in Figure 1. The e-mail provisioning phase comprises the following steps. In a preparatory step (not shown), appropriate e-mail software is installed in the host system 100 (if present) and mobile terminal 102, as well as in the e-mail server 108. For instance, the host system 100, the mobile terminal 102 and the e-mail server 108 may comprise and execute conventional e-mail software, such as Microsoft® Outlook, which may be augmented by inventive client software that will be described in more detail whenever necessary.

After the software installation, the next task is to create a secure binding between the connectivity function and the mobile terminal 102. The idea is to ensure that, in addition to the host system 100, only the mobile terminal 102 used in the binding process can be used to access and manipulate e-mail addressed to the mobile terminal's e-mail address. The binding operation faces two types of security risks. First, the communication used during binding must be secured against eavesdropping or other types of hacking. Second, the only the user of the bound terminal 102 may access e-mail addressed to the e-mail address. The eavesdropping problem is not trivial in a phase in which no trust exists between the mobile terminal 102 and the rest of the system. Yet another problem is that the e-mail server 108 and the messaging centre 110 typically have user interfaces that are only accessible to dedicated support persons.

Figure 2 shows a secure e-mail provisioning technique in which the host system 100 authenticates the user of the mobile terminal 102. In step 2-1 the client software in the mobile terminal 102 generates and displays a service activation code. In step 2-2 the host system 100 authenticates the person who enters the service activation code. Instead of a dedicated authentication step, the technique may rely on the authentication of the underlying e-mail system, such as user name and password combination. After all, the e-mail provisioning need not be more secure than the underlying e-mail system. In step 2-3 the service activation code is then conveyed off-line to the host system 100. The idea of the off-line communication is to eliminate any chance of eavesdropping before secure a communication channel can be established. For instance, the service activation code may be entered manually or via a local connection, such as a wired or optical interface or a short-range wireless interface, such as Bluetooth™. Finally, in step 2-4, the mobile terminal's service activation code is registered with the connectivity function in the messaging centre 110.

The service activation code is closely related to an encryption key to be used in future communications between the connectivity function in the messaging centre 110 and the mobile terminal 102. The service activation code and the encryption key may be identical, or one may be a subset of the other, or the encryption key may be derived from the service activation code by means of some, preferably unpublished, algorithm. The fact that the service activation code and the encryption key are closely related to each other ensures that the terminal used in the authentication process is the terminal used to access the e-mail service afterwards.

Thus the idea of conveying the service activation code to the messaging centre 110 via the host system 100 solves both the security-related and user interface-related problems mentioned above. If there is no host system 100 that can authenticate the mobile terminal and its user. Instead, the user may enter the provisioning data to the connectivity function via some suitable connection. The provisioning data entered by the user may be checked by sending a trial e-mail message and attempting to read it. If the check succeeds, it is regarded as the authentication. Yet another way is to convey the service activation code to a dedicated support person who performs the authentication (eg by recognizing the person's face or voice) and enters the service activation code into the connectivity function in the messaging centre 110. The messaging centre/connectivity function 110 now stores an association (item 122 in Figure 1) between the e-mail address 122A and encryption information 122C.

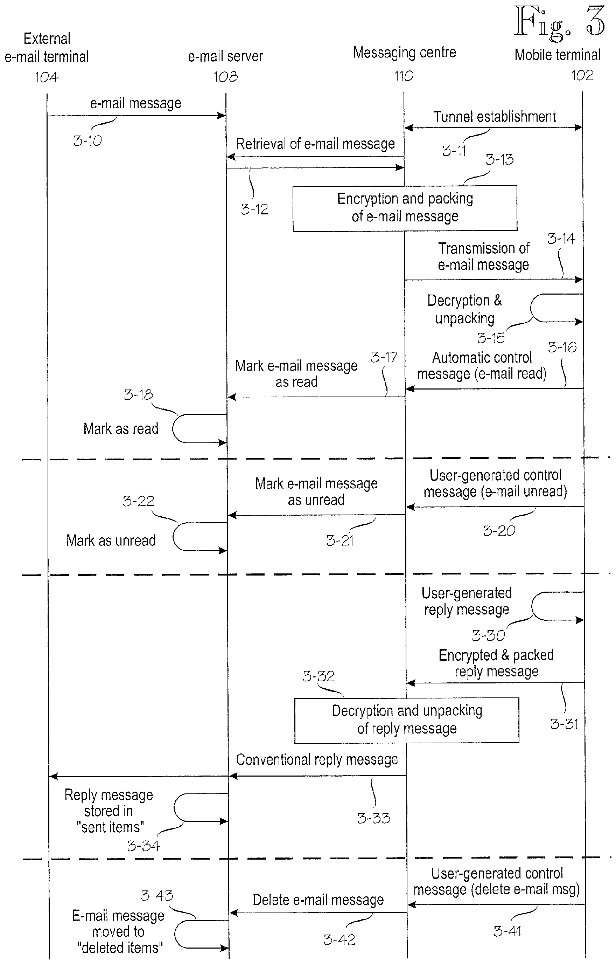

Figure 3 shows a hypothetical scenario in which the e-mail system is used. This scenario comprises four events, which are delineated by thick dashed lines. The first event, steps 3-10 through 3-16, relate to incoming e-mail. In step 3-10 the external e-mail terminal 104 sends an e-mail message to the e-mail server 108. The e-mail message is addressed to the user of the host system 100. Accordingly, a notification of the incoming e-mail is sent to the host system 100, but that step is omitted from Figure 3 as purely conventional. In step 3-11 the mobile terminal 102 requests the access network to establish a tunnel between itself and the messaging centre 110. Step 3-11 may take place before or after step 3-10. After the tunnel establishment, the messaging centre 110 now stores a complete association triplet (item 122 in Figure 1) that joins the e-mail address 122A of the host system 100, the service activation code 122C of the mobile terminal 102 and the tunnel identifier 122D of the tunnel to the mobile terminal 102.

In step 3-12 the messaging centre 110 detects and retrieves the incoming e-mail from the e-mail server 108. For instance, the messaging centre 110 may regularly poll the e-mail server 108 or it may register itself as a listener to the e-mail server. In step 3-13 the messaging centre 110 encrypts, and optionally packs, the e-mail message or parts of it. For instance, the messaging centre 110 may omit the destination address of the e-mail message because it is self-evident that the e-mail message is addressed to the user of the host system 100, who is also the user of the mobile terminal 102. The messaging centre 110 may also omit all attachments or large attachments, up to some threshold size, from the e-mail message to be conveyed to the mobile terminal. The encryption process uses the mobile terminal's service activation code 122C, or its derivative, as the encryption key. In step 3-14 the messaging centre 110 transmits the encrypted and packed e-mail to the mobile terminal that decrypts and unpacks it in step 3-15. The messaging centre 110 knows the correct encryption key (service activation code) 122C and the tunnel identifier 122D on the basis of the association triplet 122.

In step 3-16 the mobile terminal 102 sends the messaging centre 110 an automatic control message indicating that the user has read the e-mail message. In response to the control message, the messaging centre 110 signals the e-mail server 108 to mark the e-mail message as read in step 3-17, which act the e-mail server performs in step 3-18. The control message comprises some identification of the e-mail message but not its contents, whereby it loads the radio interface only lightly. A benefit of the control message is that the user, when beginning to user the host system 100, immediately sees which messages he/she has already read and does not have to read them twice.

Next in this scenario, the user decides that the e-mail message needs further attention when he/she is at the host system 100. The user may initiate another control message 3-22 that causes the previously read message to be marked as unread at the e-mail server in step 3-22.

The next phase, steps 3-30 through 3-34, relates to e-mail message generation at the mobile terminal 102. We assume here, that the e-mail message to be generated is a reply message to the incoming message described above (steps 3-10 to 3-17), but the operation is very similar if the message to be generated is an original (non-reply) message. In step 3-30 the mobile terminal user generates a reply message. Since it is a reply message, its recipient is automatically the sender of the incoming message, and the subject field comprises the original subject with a prefix of "RE:" or something similar. If the message is not a reply message, the user will have to fill in the recipient and subject fields. In step 3-31 the client software at the mobile terminal 102 encrypts, and optionally packs, the outgoing e-mail message and transmits it via the tunnel to the messaging centre 110. The messaging centre 110 does not immediately know the sender of the e-mail message or the required decryption key. But the messaging centre 110 does know the identifier of the tunnel 120, and it employs the association triplet 122 to retrieve the decryption key 122C and the mobile terminal user's e-mail address 122A. The latter is not included in the e-mail message transmitted over the wireless interface 118 in order to load the wireless interface as little as possible. In step 3-32, the messaging centre 110 employs the decryption key 122C to decrypt the e-mail message. It also inserts the mobile terminal user's e-mail address 122A, which is the same as the host system's e-mail address because they share the same e-mail account. In step 3-33 the messaging centre 110 signals the e-mail server 108 to send a conventional reply message. In step 3-34 the e-mail server 108 stores a copy of the message in its "sent items" folder. Because the messaging centre 110 signals the e-mail server 108 to send a conventional reply message, the recipient of the message has no way of knowing that the user actually used the mobile terminal to initiate the message, and the desired transparency is achieved. A benefit of the transparency is that when the external terminal 104 sends a further reply, its user does not need to decide whether to send the reply to the host system or to the mobile terminal.

The final phase, steps 3-41 to 3-43, relate to deletion of an e-mail message. In response to the mobile terminal user's deletion command, the mobile terminal 102 sends a control message in step 3-41 to the messaging centre 110. In step 3-42 it signals the e-mail server 108 to delete the message, and in step 3-43 the message is moved to the "deleted items" folder, again achieving complete transparency between the host system and the mobile terminal.

As a further example of control messages, the user of the mobile terminal 102 may wish to explicitly move an e-mail message to a particular folder. In this case the signalling is analogous to steps 3-41 to 3-43, except that the message is not deleted but moved to a different folder. Only the control message has to be sent via the wireless interface, not the actual e-mail message.

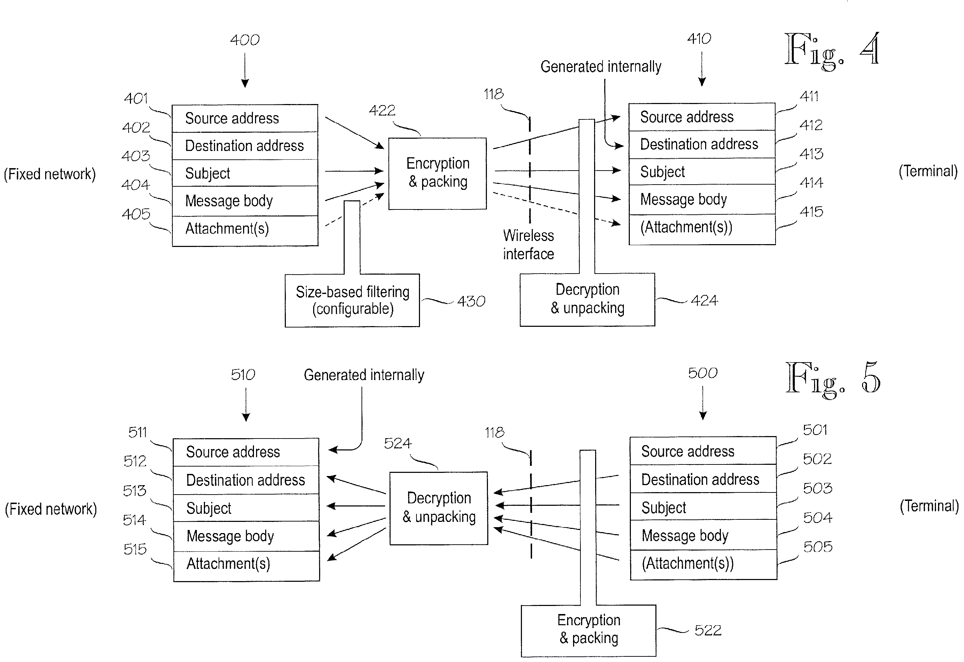

Figure 4 shows information flows in mobile-terminated e-mail transmission. Reference numeral 400 denotes an e-mail message as it appears on the fixed network side of the wireless interface 118. The e-mail message 400 is sent by an external e-mail terminal 104 and processed by the host system 100, the e-mail server 108 and/or the messaging centre 110. For the purposes of this description it comprises a source address field 401, a destination address field 402, a subject field 403, a message body field 404 and, optionally, one or more attachments 405. There may be other fields, such as cc (carbon copy) or bcc (blind carbon copy) but they can be ignored in this discussion.

The messaging centre 110 comprises an encryption and packing logic 422 that encrypts, and optionally packs (compresses), most of the fields of the e-mail message 400. However, the destination address field 402 is not processed because the mobile terminal will generate it internally. The mobile terminal comprises a decryption and unpacking logic 424 whose operation is inverse to the encryption and packing logic 422.

it is also advantageous to implement a filtering logic 430 that filters out attachments that exceed a threshold size, which is preferably user-settable. This means that the user is able to set an upper limit for attachments that will be sent to the mobile terminal. Omitting attachments saves resources in the wireless interface and the mobile terminal. Instead of filtering long attachments, or in addition to it, the filtering logic 430 may be configured to cut out portions of an e-mail message body that exceeds a threshold size. Reference numeral 410 denotes the e-mail message as received and processed by the mobile terminal. Instead of size-based filtering, or in addition to it, the filtering logic may employ type-based filtering that filters out attachment types that the mobile terminal is not able to process. For instance, if the mobile terminal does not have a suitable codec for certain types of video clips, it is pointless to send such video clips to the mobile terminal.

Figure 5 shows information flows in mobile-originated e-mail transmission. Reference numeral 500 denotes an e-mail message generated at the mobile terminal in response to a user input received via the terminal's user interface. The e-mail message 500 is encrypted, and optionally packed, by an encryption and packing logic 522 that operates similarly to the logic 422 in the messaging centre. Reference numeral 510 denotes the same e-mail message after processing by a decryption and unpacking logic 524 that reverses the encryption and packing by the logic 522.

The information flows in Figure 5 are largely analogous to those in Figure 4, and a detailed description is omitted. However, in this direction the source address, instead of the destination address, is omitted from the packet sent over the wireless interface. In either direction, the e-mail address shared between the host system 100 and the mobile terminal 102 is not transmitted over the wireless interface. Another difference to Figure 4 is absence of the size/type-based filtering logic 430, because in mobile-originated messages the user can each time make the decision whether or not to include attachments.

Figure 6 shows an enhanced embodiment in which some of the functions of the messaging centre are performed by a separate connectivity function. In the embodiments described so far the messaging centre 110 was responsible for data security issues and traffic coordination to/from the access network. In the embodiment shown in Figure 6 a dedicated connectivity function 600 is responsible for the data security issues. Figure 6 shows an arrangement in which the connectivity function 600 is physically attached to or co-located with the messaging centre 110, but they are logically separate elements. Indeed, a definite advantage of the separate connectivity function 600 is that it can be detached from the messaging centre, for instance, within the company that owns the host system 100 or the e-mail server 108. For a small number of users, the connectivity function 600 can be installed in each host system 100, or the host system 100 can be interpreted as a separate server configured to support multiple users. It is even possible to implement some or all the above-mentioned options. This means, for example, that there is one or more messaging centres 110 that offer services to several network operators, or they may be a dedicated messaging centre for each network operator (somewhat analogous to short messaging centres). Each messaging centre 110 may have an integral connectivity function 600 to support users who don't wish to install a separate connectivity function in a host system 100. For users who do install a separate connectivity function 600 in their host systems 100, such connectivity functions bypass the connectivity function in the messaging centre 110 and address the messaging centre 110 directly.

In the embodiment shown in Figures 1 to 3, the messaging centre maintained an association 122 that joined the e-mail address 122A, terminal identifier 122B (which may or may not be the same as the e-mail address), encryption information 122C and the temporary wireless identity 122D of the mobile terminal. In the embodiment shown in Figures 6 and 7, the association is split into two, such that the connectivity function 600 maintains a first association 610 between the e-mail address 122A, terminal identifier 122B and the encryption information 122C, while the messaging centre 110 maintains a second association 612 between the terminal identifier 122B (or e-mail address 122A) and the temporary wireless identity 122D of the mobile terminal. Thus in this embodiment the messaging centre 110 does not know or need to know the encryption information 122C, which means that it only forwards traffic without being able to interpret it.

A further change caused by the separation (at least logical and, optionally, physical separation) of the connectivity function 600 from the messaging centre 110 is the fact that in step 2-4 of Figure 2, the mobile terminal's activation code (or any encryption information based on it) is not delivered to the messaging centre 110 but to the connectivity function 600.

Figure 7 shows traffic flow in the embodiment shown in Figure 6. An extensive messaging scenario was described in connection with Figure 3, and the description of Figure 7 is restricted to the differences caused by the separate connectivity function. In step 7-10, the e-mail server 108 sends an incoming e-mail message to the connectivity function 600 (cf. steps 3-10 and 3-12 in Figure 3). In step 7-11, the connectivity function 600 encrypts, and optionally packs, the e-mail message. The packing comprises one or more of the following: data compression, omission of redundant fields, omission of long attachments and shortening message bodies (cf. step 3-13 in Figure 3 and items 422 and 430 in Figure 4). In step 7-12, the connectivity function 600 sends the encrypted and packed e-mail message to the messaging centre 110. Up to this point, the recipient of the e-mail message has been identified based on the e-mail address 122A. In step 7-13, the messaging centre 110 forwards the encrypted and packed e-mail message via the access network to the mobile terminal, but in this step the recipient of the e-mail message is identified based on the temporary wireless identity 122D of the mobile terminal. In step 7-14 the mobile terminal decrypts and unpacks the e-mail message. The unpacking comprises data decompression and/or regeneration of redundant fields (cf. step 3-15 in Figure 3 and item 424 in Figure 4). Steps 7-20 through 7-25 relate to mobile-originated e-mail transmission, and the steps performed are self-explanatory based on the above descriptions.

As shown on the bottom row of Figure 7, between the e-mail server 108 and the connectivity function 600, traffic is identified based on the e-mail address 122A. Between the connectivity function 600 and the messaging centre 110 traffic is identified based on the terminal identifier 122B. Finally, between the messaging centre 110 and the mobile terminal 102, traffic is identified based on the temporary wireless identity 122D, such as the tunnel identifier, TLLI or TMSI.

It is readily apparent to a person skilled in the art that, as the technology advances, the inventive concept can be implemented in various ways. The invention and its embodiments are not limited to the examples described above but may vary within the scope of the claims.

## Claims

1. A method for forwarding an e-mail message from an e-mail server (108) to a mobile terminal (102), wherein the mobile terminal has an e-mail address (122A) under the e-mail server, and permanent terminal identity (122B) and a temporary identity (122D) in an access network (114), the method comprising:
- installing a connectivity function (600) and a messaging centre (110) that are operationally coupled to each other, wherein the connectivity function (600) is operationally coupled to the e-mail server (108) and maintains a first association (610) between the e-mail address (122A), the permanent terminal identity (122B) and encryption information (122C), and wherein the messaging centre (110) is operationally coupled to the access network (114) and maintains a second association (612) between the permanent terminal identity (122B) or e-mail address (122A) and the temporary wireless identity (122D) in the access network;
- the connectivity function (600) detecting the e-mail message at the e-mail server (108), encrypting at least part of the e-mail message to create an encrypted e-mail message and sending the encrypted e-mail message to the messaging centre (110);
- the messaging centre (110) detecting the encrypted e-mail message and sending it via the access network (114) to the mobile terminal (102);
- the mobile terminal receiving and decrypting encrypted e-mail message;
wherein:
- the e-mail message is identified by the e-mail address (122A) whilst the e-mail is between the e-mail server (108) and the connectivity function (600);
- the e-mail message is identified by the permanent terminal identity (122B) whilst the e-mail is between the connectivity function (600) and the messaging centre (110); and
- the e-mail message is identified by the temporary identity (122D) whilst the e-mail is between the messaging centre (110) and the mobile terminal (102).

2. A method according to claim 1, wherein the method further comprises:
- generating a control message (3-16, 3-20, 3-41) at the mobile terminal, wherein the control message relates to an e-mail message and indicates one of the following operations: marking the e-mail message as read or unread, or deleting the e-mail message;
- in response to the control message, performing one of the following acts at the e-mail server (108):
- if the control message indicates marking the e-mail message as read or unread, marking the e-mail message as indicated by the control message; and
- if the control message indicates deleting, moving the e-mail message to a folder containing deleted e-mail messages.

3. A method according to claim 2, wherein the control message comprises some identification of the e-mail message but not its contents.

4. A method according to claim 1 or 2, wherein the method further comprises the connectivity function (600) packing the at least part of the e-mail message before transmission to the mobile terminal (102) and un-packing the at least part of the e-mail message after transmission to the mobile terminal (102).

5. A method according to claim 4, wherein the packing comprises omitting the e-mail address (402, 501) when creating an encrypted e-mail message at the connectivity function.

6. A method according to claim 1 or 2, further comprising:
- generating (2-1) encryption information (122C) at the mobile terminal;
- conveying (2-3, 2-4) the encryption information (122C) via a secure channel to the connectivity function (600), after authenticating (2-2) the entity that conveys the encryption information or by utilizing an already-performed authentication of the entity.

7. A method according to claim 6, wherein the method includes:
- at the mobile terminal (102), generating an e-mail message;
- at the mobile terminal (102), encrypting and optionally packing the e-mail message using the encryption information (122C) before transmitting the e-mail message to the connectivity function (600) via the messaging centre (110);
- at the messaging centre (110), decrypting and optionally unpacking the e-mail message using the encryption information (122C) before signaling the e-mail server (108) to send the e-mail message such that the recipient has no way of knowing that the e-mail message was initiated at the mobile terminal (102).

8. A method according to claim 7, wherein the e-mail address (122A) of the mobile terminal (102) is not included in the e-mail message transmitted by the mobile terminal (102).

9. A method according to claim 1, wherein the connectivity function (600) and messaging centre (110) are logically separate elements.

10. A method according to claim 9, wherein the connectivity function (600) and messaging centre (110) are physically separate elements

11. A system for forwarding an e-mail message from an e-mail server (108) to a mobile terminal (102), wherein the mobile terminal has an e-mail address (122A) under the e-mail server, and permanent terminal identity (122B) and a temporary identity (122D) in an access network (114);
wherein the system comprises a connectivity function that is operationally coupled to the e-mail server (108), maintains a first association (610) between the e-mail address (122A), the permanent terminal identity (122B) and encryption information (122C) and comprises:
- logic means for maintaining the first association (610) between the e-mail address (122A), the permanent terminal identifier (122B) and encryption information (122C) assigned to the mobile terminal;
- a first interface for operationally coupling the connectivity function (600) to the e-mail server (108), wherein the first interface is configured to receive the e-mail message identified by the e-mail address (122A);
- encryption means (422) for encrypting the e-mail message received via the first interface, wherein the encryption means are configured to retrieve the encryption information (122C) from the association based on o the terminal identifier (122A);
- a second interface for operationally coupling the connectivity function (600) to the messaging centre (110), wherein the messaging centre (110) is configured to forward e-mail messages to the access network, wherein the second interface is configured to transmit the encrypted e-mail message identified by the permanent terminal identity (122B) to the messaging centre (110);
wherein the system comprises a messaging centre (110) that is operationally coupled to the access network (114), maintains a second association (612) between the permanent terminal identity (122B) or e-mail address (122A) and the temporary wireless identity (122D) in the access network, and comprises:
- logic means for maintaining the second association (612) between the permanent terminal identity (122B) or e-mail address (122A) and the temporary identity (122D);
- a first interface for operationally coupling the messaging centre (110) to the connectivity function (600) that is operationally coupled to the e-mail server (108), wherein the first interface is configured to send and/or receive the e-mail message identified by the permanent terminal identity (122B);
- an address translation logic coupled to the logic means, for converting the e-mail message received via the first interface to an e-mail message identified by the temporary wireless identity (122D);
- a second interface for operational coupling to the access network (114), configured to transmit the converted e-mail message via the access network (114) to the mobile terminal (102), wherein the second interface is configured to send and/or receive the e-mail message identified by the temporary identity (122D).

12. A system according to claim 11, wherein the connectivity function further comprises a filtering logic (430) for omitting an attachment and/or one or more portions of message body from the e-mail message, in response to the attachment or message body, respectively, exceeding a predetermined size.

13. A system according to claim 12, wherein the predetermined size is user-settable.

14. A system according to claim 11, 12 or 13, wherein the connectivity function further comprises means for omitting the e-mail address (122A, 402, 501) from an e-mail message directed to the mobile terminal (102) and/or adding the e-mail address to an e-mail message originated by the mobile terminal.

15. A system according to claim 11, wherein the messaging centre further comprises means for conveying control messages (3-16, 3-20, 3-41) generated by the mobile terminal (102) to the e-mail server (108), wherein each control message indicates an act to be performed on an e-mail message but does not include an e-mail message.

## Patentansprüche

1. Verfahren zum Weiterleiten einer E-Mail-Nachricht von einem E-Mail-Server (108) an ein mobiles Endgerät (102), worin das mobile Endgerät eine E-Mail-Adresse (122A) unter dem E-Mail-Server und eine permanente Endgerätidentität (122B) und eine temporäre Identität (122D) in einem Zugriffsnetzwerk (114) aufweist, wobei das Verfahren Folgendes umfasst:
- das Installieren einer Konnektivitätsfunktion (600) und eines Nachrichtenzentrums (110), die operabel aneinander gekoppelt sind, worin die Konnektivitätsfunktion (600) operabel an den E-Mail-Server (108) gekoppelt ist und eine erste Zuordnung (610) der E-Mail-Adresse (122A), der permanenten Endgerätidentität (122B) und Verschlüsselungsinformationen (122C) verwaltet und worin das Nachrichtenzentrum (110) operabel an das Zugriffsnetzwerk (114) gekoppelt ist und eine zweite Zuordnung (612) der permanenten Endgerätidentität (122B) oder E-Mail-Adresse (122A) und der temporären drahtlosen Identität (122D) in dem Zugriffsnetzwerk verwaltet;
- das Detektieren der E-Mail-Nachricht auf dem E-Mail-Server (108), das Verschlüsseln zumindest eines Teils der E-Mail-Nachricht zum Erstellen einer verschlüsselten E-Mail-Nachricht und das Senden der verschlüsselten E-Mail-Nachricht an das Nachrichtenzentrum (110) durch die Konnektivitätsfunktion (600);
- das Detektieren der verschlüsselten E-Mail-Nachricht durch das Nachrichtenzentrum (110) und deren Versenden über das Zugriffsnetzwerk (114) an das mobile Endgerät (102);
- das Empfangen und Entschlüsseln der verschlüsselten E-Mail-Nachricht durch das mobile Endgerät; wobei:
- die E-Mail-Nachricht durch die E-Mail-Adresse (122A) identifiziert wird, während das E-Mail sich zwischen dem E-Mail-Server (108) und der Konnektivitätsfunktion (600) befindet;
- die E-Mailnachricht durch die permanente Endgerätidentität (122B) identifiziert wird, während sich das E-Mail zwischen der Konnektivitätsfunktion (600) und dem Nachrichtenzentrum (110) befindet; und
- die E-Mailnachricht durch die temporäre Identität (122D) identifiziert wird, während sich das E-Mail zwischen dem Nachrichtenzentrum (110) und dem mobilen Endgerät (102) befindet.

2. Verfahren nach Anspruch 1, worin das Verfahren ferner Folgendes umfasst:
- das Erzeugen einer Steuernachricht (3-16, 3-20, 3-41) an dem mobilen Endgerät, wobei die Steuernachricht eine E-Mail-Nachricht betrifft und eine der folgenden Operationen anzeigt: das Markieren der E-Mail-Nachricht als gelesen oder ungelesen oder das Löschen der E-Mail-Nachricht;
- in Reaktion auf die Steuernachricht das Durchführen eines der folgenden Vorgänge auf dem E-Mail-Server (108):
- wenn die Steuernachricht das Markieren der E-Mail-Nachricht als gelesen oder ungelesen anzeigt, das Markieren der E-Mail-Nachricht wie durch die Steuernachricht angegeben; und
- wenn die Steuernachricht das Löschen anzeigt, das Verschieben der E-Mail-Nachricht in einen Ordner, der gelöschte E-Mail-Nachrichten enthält.

3. Verfahren nach Anspruch 2, worin die Steuernachricht eine Identifikation der E-Mail-Nachricht umfasst, aber nicht deren Inhalte.

4. Verfahren nach Anspruch 1 oder 2, worin das Verfahren ferner umfasst, dass die Konnektivitätsfunktion (600) zumindest einen Teil der E-Mail-Nachricht vor der Übertragung an das mobile Endgerät (102) komprimiert und den zumindest einen Teil der E-Mail-Nachricht nach dem Übertragen an das mobile Endgerät (102) dekomprimiert.

5. Verfahren nach Anspruch 4, worin das Komprimieren das Weglassen der E-Mail-Adresse (402, 501) bei Erstellen einer verschlüsselten E-Mail-Nachricht an der Konnektivitätsfunktion umfasst.

6. Verfahren nach Anspruch 1 oder 2, das ferner Folgendes umfasst:
- das Erstellen (2-1) von Verschlüsselungsinformationen (122C) an dem mobilen Endgerät;
- das Übertragen (2-3, 2-4) der Verschlüsselungsinformationen (122C) über einen sicheren Kanal an die Konnektivitätsfunktion (600) nach Authentifizierung (2-2) der Einheit, die die Verschlüsselungsinformationen überträgt, oder unter Nutzung einer bereits durchgeführten Authentifizierung der Einheit.

7. Verfahren nach Anspruch 6, worin das Verfahren Folgendes umfasst:
- das Erstellen einer E-Mail-Nachricht an einem mobilen Endgerät (102);
- das Verschlüsseln und gegebenenfalls Komprimieren der E-Mail-Nachricht unter Verwendung von Verschlüsselungsinformationen (122C) an dem mobilen Endgerät (102) vor dem Übertragen der E-Mail-Nachricht über das Nachrichtenzentrum (110) an die Konnektivitätsfunktion (600);
- das Enschlüsseln und gegebenenfalls Dekomprimieren der E-Mail-Nachricht unter Verwendung der Verschlüsselungsinformationen (122C) in dem Nachrichtenzentrum (110) vor dem Aussenden eines Signals an den E-Mail-Server (108), die E-Mail-Nachricht zu versenden, so dass der Empfänger nicht wissen kann, dass die E-Mail-Nachricht an dem mobilen Endgerät (102) ihren Ausgang genommen hat.

8. Verfahren nach Anspruch 7, worin die E-Mail-Adresse (122A) des mobilen Endgeräts (102) nicht Teil der durch das mobile Endgerät (102) übertragenen E-Mail-Nachricht ist.

9. Verfahren nach Anspruch 1, worin die Konnektivitätsfunktion (600) und das Nachrichtenzentrum (110) logisch getrennte Elemente sind.

10. Verfahren nach Anspruch 9, worin die Konnektivitätsfunktion (600) und das Nachrichtenzentrum (110) physisch getrennte Elemente sind.

11. System zur Weiterleitung einer E-Mail-Nachricht von einem E-Mail-Server (108) an ein mobiles Endgerät (102), worin das mobile Endgerät eine E-Mail-Adresse (122A) unter dem E-Mail-Server, eine permanente Endgerätidentität (122B) und eine temporäre Identität (122D) in einem Zugriffsnetzwerk (114) aufweist;
worin das System eine Konnektivitätsfunktion umfasst, die operabel an den E-Mail-Server (108) gekoppelt ist, eine erste Zuordnung (610) von E-Mail-Adresse (122A), der permanenten Endgerätidentität (122B) und Verschlüsselungsinformationen (122C) verwaltet und Folgendes umfasst:
- Logikmittel zur Verwaltung der ersten Zuordnung (610) von E-Mail-Adresse (122A), der permanenten Endgerätidentität (122B) und Verschlüsselungsinformationen (122C), welche dem mobilen Endgerät zugeordnet sind;
- eine erste Schnittstelle, um die Konnektivitätsfunktion (600) operabel an den E-Mail-Server (108) zu koppeln, wobei die erste Schnittstelle konfiguriert ist, um die durch die E-Mail-Adresse (122A) identifizierte E-Mail-Nachricht zu empfangen;
- Verschlüsselungsmittel (422) zum Verschlüsseln der über die erste Schnittstelle empfangenen E-Mail-Nachricht, wobei die Verschlüsselungsmittel konfiguriert sind, die Verschlüsselungsinformationen (122C) von der Zuordnung auf Grundlage der Endgerätkennung (122A) abzufragen;
- eine zweite Schnittstelle, die die Konnektivitätsfunktion (600) operabel an das Nachrichtenzentrum (110) koppelt, wobei das Nachrichtenzentrum (110) konfiguriert ist, um E-Mail-Nachrichten an das Zugriffsnetzwerk weiterzuleiten, wobei die zweite Schnittstelle konfiguriert ist, um die verschlüsselte E-Mail-Nachricht, die durch die permanente Endgerätidentität (122B) identifiziert wird, an das Nachrichtenzentrum (110) zu übertragen;
wobei das System ein Nachrichtenzentrum (110) umfasst, das operabel an das Zugriffsnetzwerk (114) gekoppelt ist, eine zweite Zuordnung (612) von permanenter Endgerätidentität (122B) oder E-Mail-Adresse (122A) und der temporären drahtlosen Identität (122D) in dem Zugriffsnetzwerk verwaltet und Folgendes umfasst:
- ein Logikmittel zur Verwaltung der zweiten Zuordnung (612) der permanenten Endgerätidentität (122B) oder E-Mail-Adresse (122A) und der temporären Identität (122D);
- eine erste Schnittstelle, um das Nachrichtenzentrum (110) operabel an die Konnektivitätsfunktion (600) zu koppeln, welche operabel an den E-Mail-Server (108) gekoppelt ist, wobei die erste Schnittstelle konfiguriert ist, um die E-Mail-Nachricht, die durch die permanente Endgerätidentität (122B) identifiziert wird, zu versenden und/oder zu empfangen;
- eine Adressenübersetzungslogik, die an das Logikmittel gekoppelt ist, um die über die erste Schnittstelle empfangene E-Mail-Nachricht in eine durch die temporäre drahtlose Identität (122D) identifizierte E-Mail-Nachricht zu konvertieren;
- eine zweite Schnittstelle, um an das Zugriffsnetzwerk (114) operabel zu koppeln, welches konfiguriert ist, um die konvertierte E-Mail-Nachricht über das Zugriffsnetzwerk (114) an das mobile Endgerät (102) zu übertragen, wobei die zweite Schnittstelle konfiguriert ist, um die durch die temporäre Identität (122D) identifizierte E-Mail-Nachricht zu versenden und/oder zu empfangen.

12. System nach Anspruch 11, worin die Konnektivitätsfunktion ferner eine Filterlogik (430) umfasst, um einen Anhang und/oder einen oder mehrere Abschnitte des Nachrichtenkörpers von der E-Mail-Nachricht wegzulassen, wenn der Anhang bzw. der Nachrichtenkörper eine vorbestimmte Größe überschreitet.

13. System nach Anspruch 12, worin die vorbestimmte Größe durch den Benutzer einstellbar ist.

14. System nach Anspruch 11, 12 oder 13, worin die Konnektivitätsfunktion ferner Mittel zum Weglassen der E-Mail-Adresse (122A, 402, 510) von einer E-Mail-Nachricht, die an das mobile Endgerät (102) gerichtet ist, und/oder zum Hinzufügen der E-Mail-Adresse zu einer E-Mail-Nachricht, die von dem mobilen Endgerät ausgeht, umfasst.

15. System nach Anspruch 11, worin das Nachrichtenzentrum ferner Mittel zur Übertragung von durch das mobile Endgerät (102) erstellten Steuernachrichten (3-16, 3-20, 3-41) an den E-Mail-Server (108) umfasst, wobei jede Steuernachricht einen Vorgang anzeigt, der in Bezug auf eine E-Mail-Nachricht durchgeführt werden soll, aber keine E-Mail-Nachricht umfasst.

## Revendications

1. Procédé pour transmettre un message de courrier électronique d'un serveur de courrier électronique (108) à un terminal mobile (102), dans lequel le terminal mobile a une adresse de courrier électronique (122A) sous le serveur de courrier électronique, et une identité de terminal permanente (122B) et une identité temporaire (122D) dans un réseau d'accès (114), le procédé comprenant les étapes consistant à :
- installer une fonction de connectivité (600) et un centre de messagerie (110) qui sont couplés de manière opérationnelle l'un à l'autre, dans lequel la fonction de connectivité (600) est couplée de manière opérationnelle au serveur de courrier électronique (108) et maintient une première association (610) entre l'adresse de courrier électronique (122A), l'identité de terminal permanente (122B) et une information de cryptage (122C), et dans lequel le centre de messagerie (110) est couplé de manière opérationnelle au réseau d'accès (114) et maintient une deuxième association (612) entre l'identité de terminal permanente (122B) ou l'adresse de courrier électronique (122A) et l'identité sans fil temporaire (122D) dans le réseau d'accès ;
- la fonction de connectivité (600) détectant le message de courrier électronique sur le serveur de courrier électronique (108), cryptant au moins une partie du message de courrier électronique pour créer un message de courrier électronique crypté, et envoyant le message de courrier électronique crypté au centre de messagerie (110) ;
- le centre de messagerie (110) détectant le message de courrier électronique chiffré et l'envoyant via le réseau d'accès (114) au terminal mobile (102);
- le terminal mobile recevant et décryptant un message de courrier électronique crypté ;
dans lequel :
- le message de courrier électronique est identifié par l'adresse de courrier électronique (122A) tandis que le courrier électronique est entre le serveur de courrier électronique (108) et la fonction de connectivité (600) ;
- le message de courrier électronique est identifié par l'identité de terminal permanente (122B) tandis que le courrier électronique est entre la fonction de connectivité (600) et le centre de messagerie (110) ; ; et
- le message de courrier électronique est identifié par l'identité temporaire (122D) tandis que le courrier électronique se trouve entre le centre de messagerie (110) et le terminal mobile (102).

2. Procédé selon la revendication 1, dans lequel le procédé comprend en outre les étapes consistant à :
- générer un message de commande (3-16, 3-20, 3-41) au niveau du terminal mobile, dans lequel le message de commande concerne un message de courrier électronique et indique l'une des opérations suivantes : marquer le message de courrier électronique comme lu ou non lu, ou supprimer le message de courrier électronique ;
- en réponse au message de commande, exécuter l'une des actions suivantes au niveau du serveur de courrier électronique (108) :
- si le message de commande indique marquer le message de courrier électronique comme étant lu ou non lu, marquer le message de courrier électronique comme indiqué par le message de commande ; et
- si le message de commande indique supprimer, déplacer le message de courrier électronique vers un dossier contenant des messages électroniques supprimés.

3. Procédé selon la revendication 2, dans lequel le message de commande comprend une certaine identification du message de courrier électronique, mais pas son contenu.

4. Procédé selon la revendication 1 ou 2, dans lequel le procédé comprend en outre la fonction de connectivité (600) qui conditionne la au moins une partie du message de courrier électronique avant une transmission au terminal mobile (102) et déconditionne la au moins une partie du message de courrier électronique après transmission au terminal mobile (102).

5. Procédé selon la revendication 4, dans lequel le conditionnement comprend l'omission de l'adresse de courrier électronique (402, 501) lors de la création d'un message de courrier électronique crypté au niveau de la fonction de connectivité.

6. Procédé selon la revendication 1 ou 2, comprenant en outre les étapes consistant à :
- générer (2-1) une information de cryptage (122C) au niveau du terminal mobile ;
- transmettre (2-3, 2-4) l'information de cryptage (122C) via un canal sécurisé à la fonction de connectivité (600), après authentification (2-2) de l'entité qui achemine l'information de cryptage ou en utilisant une authentification déjà réalisée de l'entité.

7. Procédé selon la revendication 6, **caractérisé en ce que** le procédé comprend les étapes consistant à :
- au niveau du terminal mobile (102), générer un message de courrier électronique ;
- au niveau du terminal mobile (102), crypter et éventuellement conditionner le message de courrier électronique en utilisant l'information de cryptage (122C) avant de transmettre le message de courrier électronique à la fonction de connectivité (600) via le centre de messagerie (110) ;
- au niveau du centre de messagerie (110), décrypter et éventuellement déconditionner le message de courrier électronique en utilisant l'information de cryptage (122C) avant de signaler au serveur de courrier électronique (108) d'envoyer le message de courrier électronique de telle sorte que le destinataire n'ait aucun moyen de savoir que le message de courrier électronique a été lancé au niveau du terminal mobile (102).

8. Procédé selon la revendication 7, dans lequel l'adresse de courrier électronique (122A) du terminal mobile (102) n'est pas incluse dans le message de courrier électronique transmis par le terminal mobile (102).

9. Procédé selon la revendication 1, dans lequel la fonction de connectivité (600) et le centre de messagerie (110) sont des éléments logiquement séparés.

10. Procédé selon la revendication 9, dans lequel la fonction de connectivité (600) et le centre de messagerie (110) sont des éléments physiquement séparés.

11. Système pour transmettre un message de courrier électronique d'un serveur de courrier électronique (108) à un terminal mobile (102), dans lequel le terminal mobile a une adresse de courrier électronique (122A) sous le serveur de courrier électronique, et une identité de terminal permanente (122B) et une identité temporaire (122D) dans un réseau d'accès (114) ;
dans lequel le système comprend une fonction de connectivité qui est couplée de manière opérationnelle au serveur de courrier électronique (108), maintient une première association (610) entre l'adresse de courrier électronique (122A), l'identité de terminal permanente (122B) et l'information de cryptage (122C), et comprend :
- des moyens logiques pour maintenir la première association (610) entre l'adresse de courrier électronique (122A), l'identifiant de terminal permanent (122B) et l'information de cryptage (122C) affectés au terminal mobile ;
- une première interface pour coupler de manière opérationnelle la fonction de connectivité (600) au serveur de courrier électronique (108), dans lequel la première interface est configurée pour recevoir le message de courrier électronique identifié par l'adresse de courrier électronique (122A) ;
- des moyens de cryptage (422) pour crypter le message de courrier électronique reçu via la première interface, dans lequel les moyens de cryptage sont configurés pour récupérer l'information de cryptage (122C) depuis l'association sur la base de l'identifiant de terminal (122A) ;
- une seconde interface pour coupler de manière opérationnelle la fonction de connectivité (600) au centre de messagerie (110), dans lequel le centre de messagerie (110) est configuré pour transmettre des messages de courrier électronique au réseau d'accès, dans lequel la seconde interface est configurée pour transmettre le message de courrier électronique crypté identifié par l'identité de terminal permanente (122B) au centre de messagerie (110) ;
dans lequel le système comprend un centre de messagerie (110) qui est couplé de manière opérationnelle au réseau d'accès (114), maintient une seconde association (612) entre l'identité de terminal permanente (122B) ou l'adresse de courrier électronique (122A) et l'identité sans fil temporaire (122D) dans le réseau d'accès, et comprend :
- des moyens logiques pour maintenir la seconde association (612) entre l'identité de terminal permanente (122B) ou l'adresse de courrier électronique (122A) et l'identité temporaire (122D) ;
- une première interface pour coupler de manière opérationnelle le centre de messagerie (110) à la fonction de connectivité (600), qui est couplée de manière opérationnelle au serveur de courrier électronique (108), dans lequel la première interface est configurée pour envoyer et/ou recevoir le message de courrier électronique identifié par l'identité de terminal permanente (122B) ;
- une logique de traduction d'adresse couplée aux moyens logiques, pour convertir le message de courrier électronique reçu via la première interface en un message de courrier électronique identifié par l'identité sans fil temporaire (122D) ;
- une seconde interface pour destinée à un couplage de manière opérationnelle au réseau d'accès (114), configurée pour transmettre le message de courrier électronique converti via le réseau d'accès (114) au terminal mobile (102), dans lequel la seconde interface est configurée pour envoyer et/ou recevoir le message de courrier électronique identifié par l'identité temporaire (122D).

12. Système selon la revendication 11, dans lequel la fonction de connectivité comprend en outre une logique de filtrage (430) pour omettre une pièce jointe et/ou une ou plusieurs parties de corps de message à partir du message de courrier électronique, en réponse à la pièce jointe ou au corps de message, respectivement, dépassant une taille prédéterminée.

13. Système selon la revendication 12, dans lequel la taille prédéterminée peut être établie par l'utilisateur.

14. Système selon la revendication 11, 12 ou 13, dans lequel la fonction de connectivité comprend en outre des moyens pour omettre l'adresse de courrier électronique (122A, 402, 501) à partir d'un message de courrier électronique dirigé vers le terminal mobile (102) et/ou ajouter de l'adresse de courrier électronique à un message de courrier électronique initié par le terminal mobile.

15. Système selon la revendication 11, dans lequel le centre de messagerie comprend en outre des moyens pour transporter des messages de commande (3-16, 3-20, 3-41) générés par le terminal mobile (102) vers le serveur de courrier électronique (108), dans lequel chaque message de commande indique un acte à exécuter sur un message de courrier électronique, mais n'inclut pas de message de courrier électronique.
